# EUROPÄISCHE PATENTANMELDUNG

(11) **EP 1 921 829 A2**
(43) Veröffentlichungstag der Anmeldung: **14.05.2008**
(21) Anmeldenummer: 07017009.7
(22) Anmeldetag: 30.08.2007
(51) Int. Cl.: H04M 1/02

(54) **Kommunikationsvorrichtung**

(30) Priorität: 08.11.2006 DE 102006052735
(71) Anmelder: Telio AG, 22765 Hamburg (DE)
(72) Erfinder: Grunig, Torsten, 10245 Berlin (DE)
(74) Vertreter: Beetz & Partner

(57) **Zusammenfassung**

Die vorliegende Erfindung betrifft eine Kommunikationsvorrichtung mit: einer Eingabeeinrichtung, einer Ausgabeeinrichtung, und einem Gehäuse, das mindestens eine der Einrichtungen umgibt, wobei das Gehäuse mindestens einen ersten Gehäuseteil (1), einen zweiten Gehäuseteil (5), der mit dem ersten Gehäuseteil (1) in Eingriff gebracht wird, und einen Sensor aufweist, wobei der Sensor eine relative Positionsänderung des ersten Gehäuseteils (1) zu dem zweiten Gehäuseteil (5) erfasst.

## Beschreibung

Die vorliegende Erfindung betrifft eine Kommunikationsvorrichtung, insbesondere eine Kommunikationsvorrichtung, die einfach aufgebaut und zu montieren ist, sowie gegen Einwirkungen Dritter geschützt ist.

Solche Kommunikationsvorrichtungen (Vorrichtungen) kommen hauptsächlich dort zum Einsatz, wo mehrere Personen bzw. wechselnde Personengruppen ein und dieselbe Kommunikationsvorrichtung nutzen, wie z. B. auf öffentlichen Plätzen, Firmengeländen oder in Strafvollzugsanstalten. An diesen Einsatzorten kann der Betreiber der Kommunikationsvorrichtung nicht davon ausgehen, dass alle Benutzer mit der gebotenen Sorgfalt mit der Vorrichtung umgehen, bzw. die Kommunikationsvorrichtung nicht modifizieren oder manipulieren.

Ein weiteres Einsatzgebiet solcher Vorrichtungen sind Orte, an denen eine permanente Überwachung der Nutzung der Kommunikationsvorrichtung aus juristischen und/oder ökonomischen Gründen nicht realisiert werden kann, wodurch eine Modifizierung oder Manipulation der Kommunikationsvorrichtung von den Betreibern nicht erkannt werden kann.

Eine Problematik, die sich bei den oben erwähnten Vorrichtungen stellt, ist das unbefugte Öffnen der Vorrichtungen, um entweder die Vorrichtung zu modifizieren, oder die Vorrichtung als Versteck zu verwenden.

Bisherige Lösungen dieser Problematik beschränken sich auf Reduzierung der Anzahl der Vorrichtungen, wobei diese nur an ausgewählten und zu überwachenden Standorten bereitgestellt werden.

Ein Nachteil dieser Lösung besteht darin, dass einerseits nur eine geringe Anzahl von Vorrichtungen für die Benutzter zur Verfügung steht und andererseits die Überwachung dieser Vorrichtungen trotzdem mit hohem Aufwand und Kosten verbunden ist.

Ein weiterer Lösungsansatz besteht derzeit darin, die Gehäuse der Vorrichtungen mechanisch derart zu verstärken und/oder den Funktionsumfang der Vorrichtungen so zu reduzieren, dass eine Sabotage nicht lohnenswert und/oder eine Zerstörung kaum mehr möglich ist.

Nachteilig an diesem Lösungsansatz ist, dass entweder der Funktionsumfang der Vorrichtungen eingeschränkt oder eine aufwendigere und kostenintensivere Konstruktion notwendig wird. Dies geht zu Lasten des ökonomischen Nutzens bzw. des gewünschten Effekts.

Ein weiterer Nachteil der oben beschriebenen Lösungen besteht darin, dass bestimmte Nutzergruppen dadurch vom technischen und sozialen Fortschritt durch die Verwendung von Internet und Konvergenzdiensten ausgeschlossen werden. Bei den vorgeschlagenen Lösungen besteht derzeit keine Möglichkeit Video, Audio und/oder Daten mit bzw. unter den Benutzern auszutauschen.

Es ist daher eine Aufgabe der Erfindung, eine Kommunikationsvorrichtung anzugeben, welche die oben genannten Nachteile vermeidet.

Ferner ist es eine Aufgabe der Erfindung, eine Kommunikationsvorrichtung zu schaffen, die einen erhöhten Funktionsumfang aufweist, sowie ein Öffnen bzw. Modifizieren und/oder Manipulieren der Vorrichtung sicher erkennt.

Diese Aufgabe wird durch eine Kommunikationsvorrichtung gemäß dem unabhängigen Anspruch gelöst. Die abhängigen Ansprüche zeigen bevorzugte Ausführungsformen.

Die erfindungsgemäße Kommunikationsvorrichtung kann mindestens eine Eingabeeinrichtung, eine Ausgabeeinrichtung, und/oder ein Gehäuse, das mindestens eine der Einrichtungen umgibt, aufweisen. Das Gehäuse kann mindestens einen ersten Gehäuseteil, einen zweiten Gehäuseteil, der mit dem ersten Gehäuseteil in Eingriff gebracht wird, und/oder einen Sensor aufweisen, wobei der Sensor mindestens eine relative Positionsänderung des ersten Gehäuseteils zu dem zweiten Gehäuseteil erfassen kann.

Die Eingabeeinrichtung kann dabei aus mindestens einer numerischen und/oder alphanumerischen Tastatur bestehen. Es ist auch möglich, die Eingabeeinrichtung als akustische (Mikrofon etc.) und/ oder optische Eingabeeinrichtung (Kamera etc.) auszubilden. Auch ist eine Kombination der vorgenannten Eingabeeinrichtungen miteinander möglich.

Die Ausgabeeinrichtung kann optische und/oder akustische Informationen ausgeben. Dabei kann die Ausgabeeinrichtung aus einem Bildschirm und/ oder einem Lautsprecher bestehen. Der Bildschirm kann ein Touchscreen oder etwas Vergleichbares sein, der/ das auch als Eingabeeinrichtung verwendet werden kann.

Das Gehäuse kann aus einem mechanisch stabilen Material bestehen, wie z.B. Metall, schlagfestem Kunststoff und/oder einem Verbundmaterial. Ferner kann das Gehäuse aus mindestens zwei Gehäuseteilen bestehen. Diese Gehäuseteile können derart ausgebildet sein, dass sie miteinander in Eingriff gebracht werden können. Auch können die Gehäuseteile Mittel enthalten, die eine vordefinierte relative Bewegung zwischen den Gehäuseteilen bedingen, um die Gehäuseteile voneinander zu trennen. Dies können beispielsweise Langlöcher, Bolzen und/oder Abschrägungen sein. Ferner ist es möglich, dass ein Gehäuseteil um eine horizontale und/oder vertikale Achse gegenüber einem anderen Gehäuseteil bewegt wird, um eine mechanische Verriegelung zu lösen.

Auch kann ein Gehäuseteil eine Erhebung aufweisen, die von einer Vertiefung eines weiteren Gehäuseteils umfasst werden kann. Durch diese Erhebung und die Vertiefung kann sichergestellt werden, dass die Gehäuseteile nicht nur gegeneinander linear verschoben werden, sondern auch gegeneinander gekippt werden, wenn sie außer Eingriff gebracht werden.

In einer weiteren vorteilhaften Ausführung kann noch ein weiteres Gehäuseteil vorhanden sein, das eine Relativbewegung zwischen anderen Gehäuseteilen verhindern kann. Dies können beispielsweise ein horizontaler oder vertikaler Vorsprung, eine Nut mit Feder und/oder ein Riegel sein.

Vorteilhafterweise ist es mittels eines Sensors möglich, eine etwaige Öffnung des Gehäuses zu detektieren, d.h. der Sensor kann jede Positionsänderung des ersten Gehäuseteils zu dem zweiten Gehäuseteil erfassen. Das kann durch die Erfassung einer horizontalen Positionsänderung eines Gehäuseteils zu einem weiteren Gehäuseteil geschehen. Auch ist es möglich, dass der Sensor eine Winkeländerung zwischen einem Gehäuseteil und einem weiteren Gehäuseteil erfasst.

Des Weiteren kann der Sensor einen Abstand zwischen einem Gehäuseteil und einem weiteren Gehäuseteil erfassen. Der Sensor kann ein weiteres Sensorsignal ausgeben, wenn ein Schwellenwert der erfassten Änderungen wie z.B. Winkel, Abstand, horizontale und/oder vertikale Position überschritten wird. Es können auch mehrere Sensoren vorhanden sein, die miteinander kombiniert werden können. Bei Vorliegen des weiteren Sensorsignals kann in der Kommunikationsvorrichtung ein Alarm ausgelöst werden.

Dieser Sensor kann beispielsweise ein mechanischer, optischer, akustischer; kapazitiver und/oder magnetischer Sensor sein. Entscheidend ist nur, dass es mit dem Sensor möglich ist, eine Positionsänderung zu erkennen. In einer weiteren Ausgestaltung kann der Sensor ein Reed-Kontakt, ein Näherungssensor, ein Neigungssensor, ein Gyroskop, eine Lichtschranke, ein Drucksensor und/oder ein Flüssigkeitssensor sein.

Der Sensor kann in der Nähe der Achse, um die die Gehäuseteile zueinander bewegt werden, angebracht sein. Diese Achse kann in horizontaler, vertikaler oder einem freiwählbaren Winkel eingerichtet sein. Des Weiteren kann die Achse parallel zu einer Hauptausdehnung des ersten Gehäuseteils liegen. Ferner ist es möglich den Sensor an dem einen und/oder an dem weiteren Gehäuseteil anzubringen, oder auf die Gehäuseteile zu verteilen.

In einer Weiteren vorteilhaften Ausbildung kann die erfindungsgemäße Kommunikationsvorrichtung modular aufgebaut sein. Beispielsweise kann die Kommunikationsvorrichtung mindestens ein Eingabemodul, ein Ausgabemodul und/oder ein Multimediamodul aufweisen. Die Kommunikationsvorrichtung und/oder das Multimediamodul können so eingerichtet sein, dass Medien aufgenommen werden können.

Das Multimediamodul kann ein CD-/DVD-Laufwerk enthalten, welches über eine Auswerteschaltung Medien erkennen kann und, falls diese nicht zur Wiedergabe zugelassen sind, deren Wiedergabe unterbindet. Beispielsweise kann über jedes Medium eine Prüfsumme berechnet werden, worüber der Datenträger (DVD, DVD-RAM, CD-ROM, CD-RW etc.) eindeutig identifiziert werden kann. Anhand dieser Identifizierung kann der Datenträger/das Medium einem Benutzer zugeordnet werden. Anhand einer Weiß-/Schwarzliste kann entschieden werden, ob der Benutzer den identifizierten Datenträger verwenden darf. Durch die Identifizierung des Datenträgers kann ein unerlaubter Tausch bzw. Handel unter den Benutzern mit den Medien unterbunden werden.

In einer weiteren vorteilhaften Ausgestaltung kann das Multimediamodul eine Ausgabeeinrichtung enthalten, mit der es möglich ist Dokumente anzuzeigen. In Verbindung mit einer Eingabeeinrichtung können auch Dokumente elektronisch erstellt werden. Dadurch ist es möglich, dass der Benutzer direkt an der Kommunikationsvorrichtung Dokumente einsieht, beantwortet und/ oder erstellt, sowie diese an den Empfänger übermittelt. Die Übermittlung kann über ein beliebiges, geeignetes Netzwerkprotokoll (TCP/ID, ISDN, IPX) erfolgen.

Die Kommunikationsvorrichtung kann leitungsgebunden oder leitungsfrei mit mindestens einem Kommunikationsnetzwerk verbunden werden.

Des Weiteren können mehrere Kommunikationsvorrichtungen zusammengeschaltet werden. Dadurch ist es möglich, dass mehrere Benutzer miteinander kommunizieren können und/oder die Benutzer gemeinsam unterrichtet werden. Dies kann zur Weitergabe von Informationen und/oder zur Durchführung von Schulungen verwendet werden.

Zusätzlich kann die erfindungsgemäße Kommunikationsvorrichtung einen weiteren Sensor zur Erkennung eines Schlages auf das Gehäuse und/oder eine Einrichtung aufweisen.

Diese Schlagerkennung kann über einen mechanischen, optischen, akustischen, kapazitiven und/oder magnetischen oder sonstigen geeigneten Sensor erfasst werden. Der Sensor kann in dem Kommunikationsvorrichtung und/oder in einer Eingabeeinrichtung platziert sein.

Der Sensor zur Schlagerkennung kann ein Signal ausgeben, wenn ein Schwellenwert überschritten wird. Es können auch mehrere Sensoren vorhanden sein, die miteinander kombiniert werden können. Bei Vorliegen des Signals des Schlagerkennungssensors kann in der Kommunikationsvorrichtung ein Alarm ausgelöst werden.

Die oben beschriebenen Merkmale und Ausführungen der Erfindung können ganz oder teilweise miteinander kombiniert werden ohne von dem allgemeinen Erfindungsgedanken abzuweichen.

Weitere Besonderheiten und Vorzüge der Erfindung lassen sich anhand der schematischen Zeichnungen und der folgenden Beschreibung entnehmen; es zeigen:
Fig. 1 ein erstes und zweites Gehäuseteil,
Fig. 2 eine Verriegelung zwischen erstem und zweitem Gehäuseteil, und
Fig. 3 eine schematische Ansicht der Gehäuseteile.

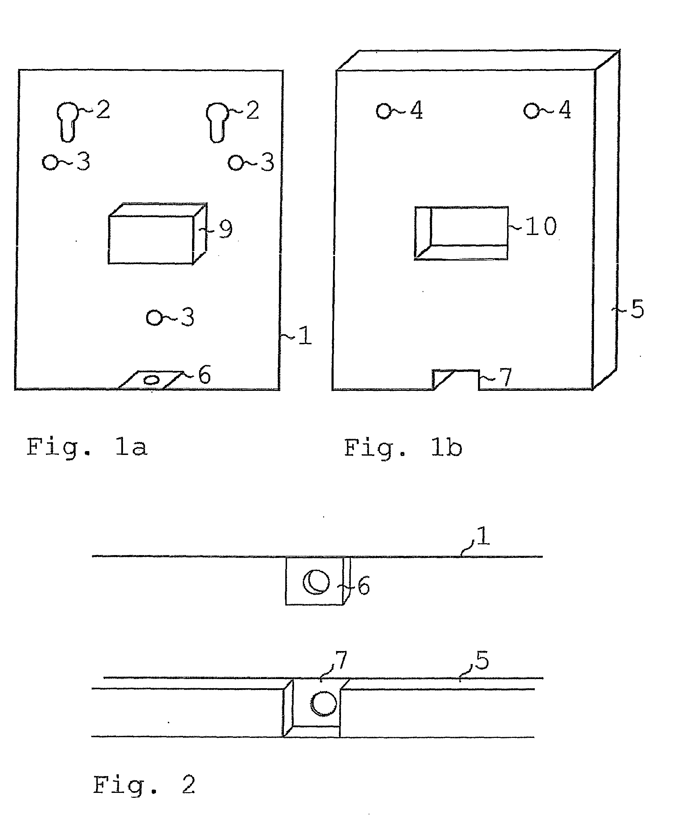

Fig. 1 zeigt eine Montageplatte 1, die über mehrere Befestigungslöcher 3 an einer Wand (nicht gezeigt) befestigt wird. Ferner weist die Montageplatte 1 mehrere Langlöcher 2 und eine Lasche 6 mit Loch auf. Des Weiteren zeigt Figur 1 ein Gehäuseteil 5, das eine Vertiefung 7 mit einer Bohrung aufweist, wobei die Lasche 6 durch die Vertiefung 7 aufgenommen werden kann. Ferner weist das Gehäuseteil Bolzen mit Kopf 4 auf, die mit den Langlöchern 2 in Eingriff gebracht werden können. Durch das Ineingriffbringen der Bolzen mit Kopf 4 mit den Langenlöchern 2, sowie der Lasche 6 mit der Vertiefung 7 kann das Gehäuseteil mit der Montageplatte lösbar verbunden werden.

Des Weiteren zeigt Figur 1 eine Erhebung 9 auf der Montageplatte 1, die wiederum von einer Vertiefung 10 in dem Gehäuseteil 5 aufgenommen werden kann. Durch die Erhebung 9 und die Vertiefung 10 kann sichergestellt werden, dass das Gehäuseteil 5 von der Montageplatte 1 wegbewegt wird, um das Gehäuseteil 5 außer Eingriff mit der Montageplatte 1 zu bringen.

Figur 2 zeigt einen Ausschnitt der Montageplatte 1 und des Gehäuseteils 5 im gelösten Zustand. Ferner zeigt Figur 2 wie die Lasche 6 durch die Vertiefung 7 aufgenommen werden kann. Beide Teile können anschließend durch einen Schraube, Splint oder Ähnliches, unter Verwendung der fluchtenden Löcher in der Lasche 6 und der Vertiefung 7 miteinander fixiert.

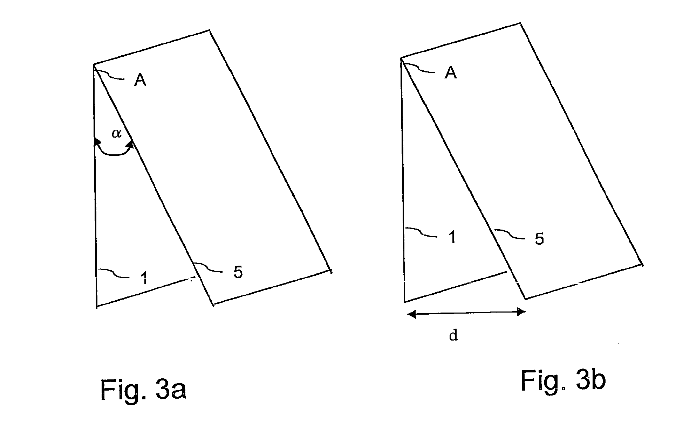

Figur 3a zeigt schematisch die Montageplatte 1 und das Gehäuseteil 5, sowie den zu bestimmenden Winkel α zwischen der Montageplatte 1 und dem Gehäuseteil 5. Figur 3b zeigt die Montageplatte 1 und das Gehäuseteil 5, sowie den zu bestimmenden Abstand d zwischen der Montageplatte 1 und dem Gehäuseteil 5.

## Patentansprüche

1. Kommunikationsvorrichtung mit:
einer Eingabeeinrichtung, einer Ausgabeeinrichtung, und einem Gehäuse, das mindestens eine der Einrichtungen umgibt, wobei
das Gehäuse mindestens
- einen ersten Gehäuseteil (1),
- einen zweiten Gehäuseteil (5), der mit dem ersten Gehäuseteil (1) in Eingriff gebracht wird, und
- einen Sensor aufweist, wobei
der Sensor eine relative Positionsänderung des ersten Gehäuseteils (1) zu dem zweiten Gehäuseteil (5) erfasst.

2. Kommunikationsvorrichtung nach Anspruch 1, wobei der Sensor eine horizontale Positionsänderung des ersten Gehäuseteils (1) zu dem zweiten Gehäuseteil (5) erfasst.

3. Kommunikationsvorrichtung nach Anspruch 1 oder 2, wobei der Sensor einen Winkel α zwischen dem ersten Gehäuseteils (1) und dem zweiten Gehäuseteils (5) erfasst.

4. Kommunikationsvorrichtung nach einem der vorangegangenen Ansprüche, wobei der Sensor einen Abstand d zwischen dem ersten Gehäuseteil (1) und dem zweiten Gehäuseteil (5) erfasst.

5. Kommunikationsvorrichtung nach einem der vorangegangenen Ansprüche, wobei das zweite Gehäuseteil (5) um eine horizontale Achse A gegenüber dem ersten Gehäuseteil (1) bewegt wird.

6. Kommunikationsvorrichtung nach einem der vorangegangenen Ansprüche, wobei das Gehäuse (1, 2) ein drittes Gehäuseteil (6) aufweist, das eine vertikale Relativbewegung zwischen dem ersten Gehäuseteil (1) und dem zweiten Gehäuseteil (5) verhindert.

7. Kommunikationsvorrichtung nach Anspruch 5, wobei das dritte Gehäuseteil (6) als horizontaler Vorsprung ausgebildet ist.

8. Kommunikationsvorrichtung nach Anspruch 5 oder 6, wobei das dritte Gehäuseteil (6) eine Aussparung aufweist.

9. Kommunikationsvorrichtung nach einem der vorangegangenen Ansprüche, wobei ein weiteres Signal erzeugt wird, wenn das Sensorsignal einen Schwellenwert überschreitet.

10. Kommunikationsvorrichtung nach einem der vorangegangenen Ansprüche, wobei die Kommunikationsvorrichtung modular aufgebaut ist.

11. Kommunikationsvorrichtung nach einem der vorangegangenen Ansprüche, wobei die Kommunikationsvorrichtung zusätzlich mindestens ein Multimediagerät aufweist.

12. Kommunikationsvorrichtung nach einem der vorangegangenen Ansprüche, wobei die Kommunikationsvorrichtung mindestens eine Einrichtung zur Aufnahme von Medien aufweist.

13. Kommunikationsvorrichtung nach einem der vorangegangenen Ansprüche, wobei die Kommunikationsvorrichtung einen Sensor zur Erkennung eines Schlages aufweist.
